# EUROPEAN PATENT APPLICATION

(11) **EP 1 326 012 A2**
(43) Date of publication of application: **09.07.2003**
(21) Application number: 02080294.8
(22) Date of filing: 16.12.2002
(51) Int. Cl.: F01N 3/28

(54) **Exhaust emissions control devices comprising adhesive**

(30) Priority: 08.01.2002 US 347112 P
(71) Applicant: Delphi Technologies, Inc., Troy, MI 48007 (US)
(72) Inventor: Turek, Alan Gerard, Mayville, MI 48744 (US); Foster, Michael R., Columbiaville, MI 48421 (US)
(74) Representative: Denton, Michael John

(57) **Abstract**

One embodiment for making an exhaust emissions control device comprises: disposing a mat support material (2) around at least a portion of a substrate (1), disposing a shell (6,13,14,15) on a side of the mat support material (2) opposite the substrate (1), and adhesively bonding the mat support material (2) to at least one of the substrate (1) and the shell with a material comprising an inorganic binder.

One embodiment of an exhaust emissions control device, comprises: a mat support material (2) disposed between a substrate (1) and a shell (6,13,14,15), wherein the mat support material (2) is adhesively bonded to at least one of the substrate (1) and the shell (6,13,14,15) with a material

## Description

### BACKGROUND OF THE INVENTION

The removal of emissions, such as hydrocarbon, carbon monoxide, nitrogen oxide, particulate matter, and the like, from the exhaust gases of internal combustion engines, in flue gases, and the like, is required to meet increasingly strict environmental standards. One focus area for such exhaust emission reduction has been in the area of post combustion treatment. Post combustion treatment includes the placement of one or more exhaust emission control devices in the exhaust stream downstream of the combustion source. Such exhaust emission control devices include catalytic converters, catalytic absorbers, scrubbers, particulate traps, non-thermal plasma conversion devices, and the like.

The exhaust emission control devices can comprise a substrate that may comprise a catalyst to convert noxious components of the exhaust gas, such as hydrocarbons (HC), carbon monoxide (CO), and/or nitrogen oxides (NO_{X}), to carbon dioxide (CO₂), water (H₂O), and nitrogen (N₂). The substrate is housed within a gas-tight, sheet metal or cast-metal heat resistant housing, can, or shell. Disposed on the substrate, between the shell and the substrate is a mat support material.

In order to meet governmental mandated exhaust gas emissions standards, frangible substrates may be employed. However, such substrates have a solid density and wall thickness that will yield a significantly weaker structure. As such, a significant loss due to the breaking of the substrate either during manufacturing or after a relatively short life may be encountered.

Diesel engines may additionally employ diesel particulate filter devices that accumulate soot, placing a substantial axial force on the substrate. A mechanical stop may be used to prevent movement of the substrate and to prevent abrasive damage from vibrations occurring during operation, however the incorporation of such mechanical stop is costly. Thus, an efficient emission control device with a frangible substrate that is protected from the shock and vibration of operating conditions is desirable.

### BRIEF SUMMARY

Disclosed herein are exhaust emission control devices and methods for making those devices. In one embodiment the method comprises: disposing a mat support material around at least a portion of a substrate, disposing a shell on a side of the mat support material opposite the substrate, and bonding the mat support material to at least one of the substrate and the shell with a material comprising an inorganic binder.

In one embodiment, the exhaust emissions control device, comprises: a mat support material disposed between a substrate and a shell, wherein the mat support material is adhesively bonded to at least one of the substrate and the shell with a material comprising an inorganic binder.

The above-described and other features are exemplified by the following detailed description and drawings.

### BRIEF DESCRIPTION OF THE DRAWINGS

Referring now to the drawings wherein like elements are numbered alike in the several Figures:
Figure 1 is a perspective view showing a mat support material, a substrate, and an adhesive;
Figure 2 is a perspective view showing a substrate and mat support material subassembly;
Figure 3 is a perspective view showing a "clamshell" type shell and adhesive;
Figure 4 is a perspective view showing the subassembly in a "clamshell" type shell;
Figure 5 is a perspective view showing an assembled emission control device using a "clamshell" type shell;
Figure 6 is a perspective view showing a "tubular" type shell;
Figure 7 is a full section view showing use of a stuffing cone to compress the subassembly;
Figure 8 is a perspective view showing an assembled emission control device using a "tubular" type shell;
Figure 9 is a full section view showing use of an injecting stuffing cone to compress the subassembly and to inject adhesive;
Figure 10 is a perspective view showing a "tourniquet" type shell;
Figure 11 is a perspective view showing an assembled emission control device using a "tourniquet" type shell;
Figure 12 is a full section view showing a "sized down" type shell and a subassembly; and
Figure 13 is a perspective view showing an assembled emission control device using a "sized down" type shell.

### DETAILED DESCRIPTION OF THE PREFERRED EMBODIMENTS

Disclosed herein is a method for making an emissions control device comprising disposing a mat support material around at least a portion of a substrate, and disposing a shell on a side of the mat support material opposite the substrate. The method further comprises adhesively bonding mat support material and the substrate together and/or the shell and the mat support material together.

The substrate can comprise any material designed for use in a spark ignition or a diesel engine environment and that is capable of operating under exhaust system conditions, that is, temperatures up to and exceeding about 1,000°C (e.g., depending upon the location of the exhaust emission control device in the exhaust system), exposure to hydrocarbons, nitrous oxides, carbon monoxide, particulate matter (e.g., soot), carbon dioxide, and/or sulfur, and having sufficient surface area and structural integrity to support a catalyst, if desired. Some possible suitable materials include cordierite, silicon carbide, metal, metal oxides (e.g., alumina), glasses, and the like, as well as combinations comprising at least one of the foregoing materials. Some ceramic materials include "Honey Ceram", commercially available from NGK-Locke, Inc, Southfield, Michigan, and "Celcor", commercially available from Corning, Inc., Corning, New York. These materials can be in the form of foils, porous materials, sponges, and the like, e.g., metallic foils, open pore alumina sponges, and porous ultra-low expansion glasses.

Although the substrate can have any size or geometry, the size and geometry are preferably chosen to optimize surface area within the given control device design parameters. The substrate can have a honeycomb geometry, with the combs being any multi-sided or rounded shape, with substantially square, hexagonal, octagonal or similar shapes preferred due to ease of manufacturing and increased surface area.

Depending upon the type of exhaust emission control device, optionally disposed on and/or throughout the substrate can be a catalyst for converting exhaust gasses to acceptable emissions levels. The catalyst may comprise one or more catalyst materials that are wash-coated, imbibed, impregnated, physisorbed, chemisorbed, precipitated, or otherwise applied to the substrate. Possible catalyst materials include metals, such as platinum, palladium, rhodium, iridium, osmium, ruthenium, tantalum, zirconium, yttrium, manganese, cerium, nickel, copper, and the like, as well as oxides, alloys, and combinations comprising at least one of the foregoing catalyst materials, and other catalysts.

Disposed around the substrate is a mat support material. The mat support material provides structural integrity for the substrate and insulates the shell and nearby components from high exhaust gas temperatures and from the exothermic reaction occurring within the exhaust emission control device. The mat support can either be an intumescent material (e.g., a material that comprises vermiculite component, i.e., a component that expands upon the application of heat), a non-intumescent material, or a combination thereof. These materials can comprise ceramic materials (e.g., ceramic fibers) and other materials such as organic and inorganic binders and the like, or combinations comprising at least one of the foregoing materials. Non-intumescent materials include materials such as those sold under the trademarks "NEXTEL" and "INTERAM 1101HT" by the "3M" Company, Minneapolis, Minnesota, or those sold under the trademark, "FIBERFRAX" and "CC-MAX" by the Unifrax Co., Niagara Falls, New York, and the like. Intumescent materials include materials sold under the trademark "INTERAM" by the "3M" Company, Minneapolis, Minnesota, as well as those intumescents which are also sold under the aforementioned "FIBERFRAX" trademark, as well as combinations thereof and others.

The mat support material and the substrate are bonded together, therefore the position of the mat support material remains fixed relative to the substrate during operation of the emissions control device. The substrate is resiliently supported in the shell, i.e., when the substrate comprises a ceramic support material, to allow for the differing thermal growth of the substrate relative to the shell. The long-term durability of the exhaust emission control device is predicated upon the retention of the substrate. If retention of the substrate is achieved solely by transmitting relatively high normal forces from the shell to the mat support material and the substrate, then damage to the substrate may result, especially for devices that employ more fragile substrates. Thus, to avoid damage or failure the normal forces applied to the substrate can be reduced by adhesively bonding the mat support material to the substrate in order to retain the substrate.

With diesel engines, the axial retention of a substrate is exasperated. Pressure that is applied to the substrate by particulate filters that trap soot increase the exhaust pressure against the substrate. This axial pressure can be as high as about 10 pounds per square inch (psi) on the frontal area of the filter, or equivalently, for example, about 250 pounds total axial load on a 5.66 inch diameter filter. Under these conditions, the mat support material may not exert a high enough normal force on the substrate to keep it from moving axially without the possibility of crushing the substrate.

Maintaining a positioning of the mat support material relative to the substrate, may be accomplished by increasing the coefficient of friction between contacting surfaces, by bonding the mat support material to the substrate, or by any other suitable methods. Bonding includes any attachment of the mat support material to the substrate with an adhesive. Preferred adhesives are those capable of withstanding high temperature conditions "high temperature adhesives" (i.e., temperatures of up to about 600°C in a diesel environment, and up to about 1,000°C in a spark ignition environment). In contrast to temporary adhesives that 'burn-off' with the application of increased heat, pressure, or some other variation in conditions, such high temperature adhesives remain present throughout normal operating conditions.

Suitable adhesives include any material capable of connecting two other materials together, immediately or after a suitable drying, curing and/or temperature induced activating or curing period. Preferably, the adhesives are of a type suitable for permanently bonding, or connecting the two other materials, for the intended usage period, the bond remaining permanent despite exposure to the high temperatures, oxidizing or reducing atmospheres, water, and other constituents encountered in the exhaust system of internal combustion engines. Suitable adhesives comprise at least a portion of inorganic binder. Examples of some adhesives include those available from Aremco Products Inc., Ossining, NY, e.g., material 671; as well as similar products from Cotronics Corporation, Brooklyn, NY, and Sauereisen, Pittsburgh, Pennsylvania.

The use of an adhesive can enhance the retention capabilities of the mat support without increasing the mat support density or the forces applied to the substrate. The adhesive may be applied by spraying, painting, immersing, spreading, or any other suitable means of applying to at least a portion of the outer surfaces of the substrate, the inner surface of the mat support material, the outer surface of the mat support material, and/or the inner surface of the shell, so as to provide adhesive in at least a portion of one of the respective interfaces. Adhesive is preferably applied during assembly of the emissions control device.

If an "activating adhesive" were employed, it would adhere the respective surfaces upon activation (e.g., exposure to sufficient temperature and/or pressure), wherein a non-activating adhesive bonds the surfaces upon contact. With the activated adhesive, it can be applied during assembly and activated during or after assembly, as desired.

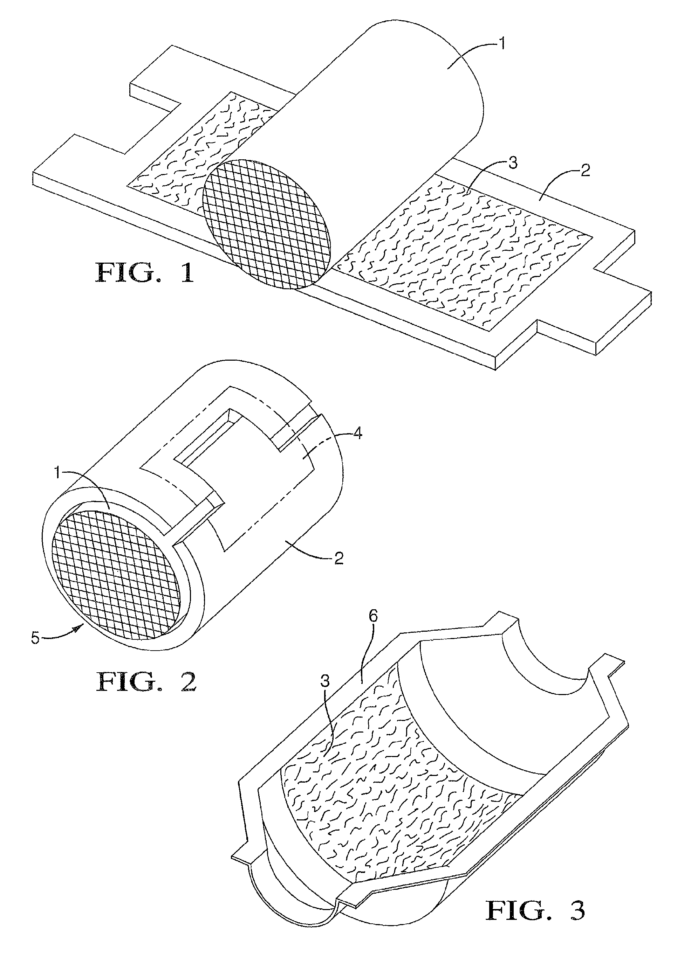

As is shown in Figure 1, a mat support material 2 comprises an adhesive 3, e.g., a high temperature adhesive, prior to being disposed around substrate 1. Figure 2 shows a substrate and mat support material subassembly ("subassembly") comprising mat support material 2, preferably comprising adhesive, and wrapped around substrate 1, such that mat support material 2 becomes bonded to substrate 1. As such, the positioning of mat support material 2 relative to substrate 1 will remain fixed during operations. Optionally, a section of tape 4 may be used to hold ends of mat support material 2 together while the adhesive dries, cures, or the like, and may be either removed or left in place after bonding is complete.

A shell is disposed on a side of the mat support material opposite the substrate. Materials suitable for the shell depend upon the type of exhaust gas, the maximum temperature reached by the substrate, the maximum temperature of the exhaust gas stream, and the like. The shell can comprise any material that is compatible with the operating conditions and the environment (e.g., capable of resisting under-car salt, temperature, stress, and corrosion). Ferrous materials can be employed including ferritic stainless steels and austenitic stainless steels. Ferritic stainless steels include stainless steels such as, e.g., the 400 - Series, SS-409, SS-439, and SS-441, with grade SS-409 generally preferred. Austenitic stainless steels include stainless steels such as SAE 304 (Society of Automotive Engineers 304). Any type of shell configuration capable of enclosing the substrate and mat support material is suitable including, but not limited to, a "clamshell" type shell, a "tubular" type shell, a "tourniquet" type shell, a "sized down" type shell, and the like.

Additionally, end cone(s), end plate(s), exhaust manifold cover(s), and the like, can be concentrically fitted about the one or both ends of the emissions control device and secured to the shell, preferably providing a gas tight seal. These components can be formed separately (e.g., molded or the like), or can be formed integrally with the shell using a method such as, e.g., spin forming, or the like.

The positioning of the shell remains constant relative to the mat support material during operations. As with the mat support material and the substrate, the shell may be bonded to the mat support material by use of an adhesive. Generally, spraying, immersing, spreading, or other suitable means may be used to apply the adhesive. Application of the adhesive may vary depending on the particular shell configuration.

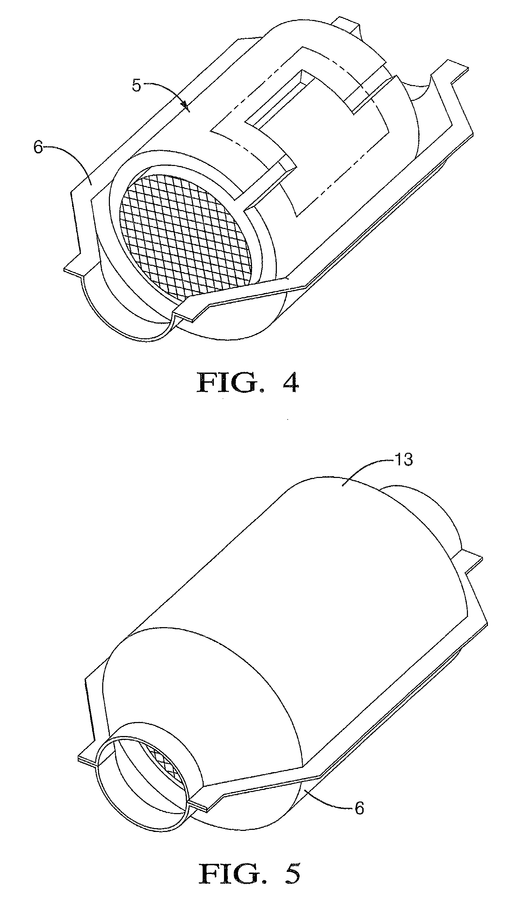

Figure 3 shows half shell 6 of a "clamshell" type shell. Adhesive 3 is applied to an inner surface of half shell 6. As is shown in Figure 4, subassembly 5 is placed within the inner surface of half shell 6, such that subassembly 5 is contacted with the adhesive. As such, the mat support material of subassembly 5 becomes bonded to half shell 6. Figure 5 shows an assembled emission control device using a "clamshell" type shell wherein another half shell 13 is placed over subassembly 5 opposite and in contact with half shell 6. As with half shell 6, an adhesive may also be applied to an inner surface of half shell 13. Optionally, flanges on each of half shell 6 and half shell 13 may be connected, e.g., by welding or otherwise, to complete assembly of the device. Alternatively, the adhesive may be applied to a substantial surface of the mat support material opposite the substrate. Half shell 6 and half shell 13 can then be assembled around subassembly 5 and the flanges connected.

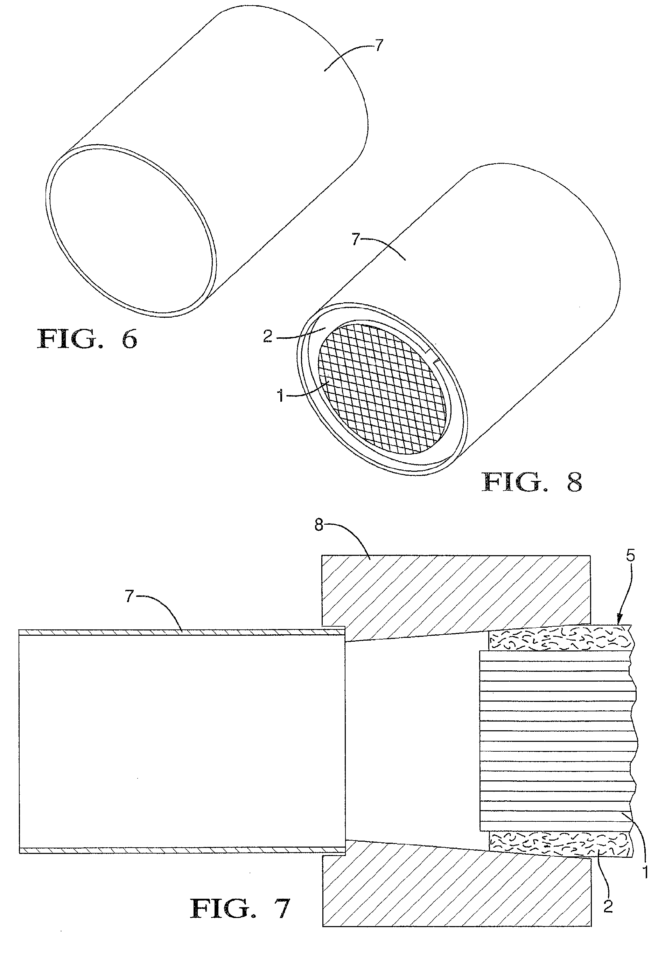

In the construction of an emissions control device using a "tubular" type shell, the shell comprises a tubular component 7, as is shown in Figure 6. Tubular component 7 preferably comprises steel. To place subassembly 5 in tubular component 7, a stuffing cone 8 is used to compress mat support material 2 of subassembly 5, enabling it to be placed or "stuffed" into tubular component 7, as is shown in Figure 7. The outer surface of subassembly 5 may be coated with an adhesive, and before the adhesive has set, subassembly 5 is "stuffed" into tubular component 7, i.e., by a ram forcing subassembly 5 through stuffing cone 8, compressing mat support material 2 and reducing the diameter of subassembly 5, so subassembly 5 fits within tubular component 7, and resulting in an assembled emission control device, as is shown in Figure 8.

For simplicity of forming the exhaust emission control device, a combination of adhesives can be employed. A non-activating adhesive can be disposed between the mat support material 2 and the substrate 1 to bond the mat support material to the substrate during assembly. This ensures that the mat support material remains in place around the desired portion of the substrate during assembly. An activating adhesive can be employed between the mat support material and the shell (e.g., on the inner surface of the shell, the outer surface of the mat support material, and/or both). Employing an activating adhesive at this interface enables facile assembly of the subassembly into the shell without binding or tearing of the mat support material, or undue friction.

Bonding substrate 1 to mat support material 2 prevents mat support material 2 from sliding in relation to substrate 1 during "stuffing" of subassembly 5 into tubular component 7. Without adhesive, the amount of slippage can be enough to cause mat support material 2, during stuffing, to overhang an end of substrate 1 and to stop short of an opposing end of substrate 1. Non-uniform support may result in subsequent damage of substrate 1.

Alternatively, to prevent contamination of stuffing cone 8 with adhesive, subassembly 5 may be retained in tubular component 7 without the use of an adhesive. Retention of subassembly 5 may be achieved by increasing the coefficient of friction between subassembly 5 and tubular component 7. The coefficient of friction can be increased by roughening or abrading an outer surface of subassembly 5 and/or the inner surface at tubular component 7, and/or by applying an abrasive coating to either or both surfaces. Roughening or abrading may be achieved through use of an abrasive and/or through machining. The coating can comprise any material that results in a roughened surface between subassembly 5 and tubular component 7, to achieve the desired coefficient of friction therebetween.

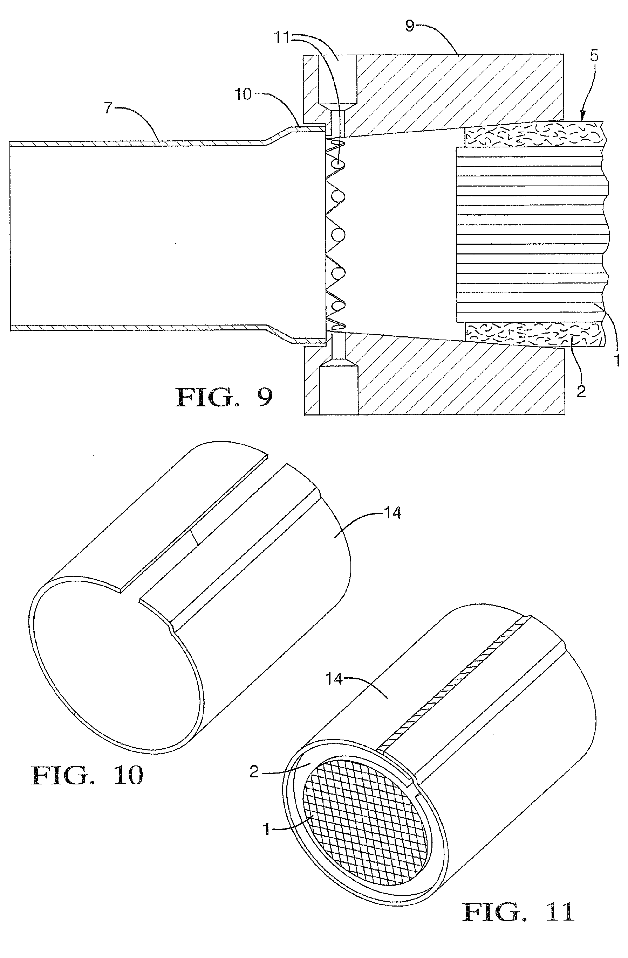

In another embodiment, if the application of adhesive to any of the inner surface of tubular component 7 and the outer surface of subassembly 5 is desired, a stuffing cone designed to inject adhesive during stuffing "injecting stuffing cone" may be employed. As is shown in Figure 9, injecting stuffing cone 9 injects adhesive into the tubular component 7 in a manner such that the adhesive coats the outer surface of subassembly 5 just prior to the final compression of mat support material 2. Figure 9 shows that tubular component 7 has an optional enlarged or expanded end 10, and injecting stuffing cone 9 has passages 11 that are used to inject adhesive into expanded end 10 as subassembly 5 passes, coating the outer surface of mat support material 2 in the process. Expanded end 10 preferably has a diameter greater than or equal to the diameter of the corresponding end of injecting stuffing cone 9 to allow subassembly 5 to enter tubular component 7 without catching on an edge of tubular component 7. Expanded end 10 further allows adhesive to be injected via passages 11 into and distributed throughout expanded end 10 as subassembly 5 passes therethrough to allow the adhesive to spread and coat a majority of the outer surface of subassembly 5. Further, expanded end 10 allows the corresponding end of injecting stuffing cone 9 to be larger than tubular component 7, thereby eliminating the need to apply a compressive pressure to subassembly 5 during stuffing that is higher than the compressive pressure it will be subjected to when installed in tubular component 7. As such, compressive failure of substrate 1 of subassembly 5 in the stuffing cone may be minimized or avoided.

Alternatively, as stated above, to prevent contamination of stuffing cone 8, an "activated adhesive" may be applied to the outer surface of the substrate, the inner surface of the mat support material, the outer surface of the mat support material, and the inner surface of the shell, or any other surface suitable for retention of the substrate. The activated adhesive would become activated by the addition of heat, a change in pressure, a change in moisture, and the like, or any other suitable change in conditions. Activation of the adhesive may occur at any point after subassembly 5 is within tubular component 7, preferably during assembly following stuffing, or during initial vehicle operation.

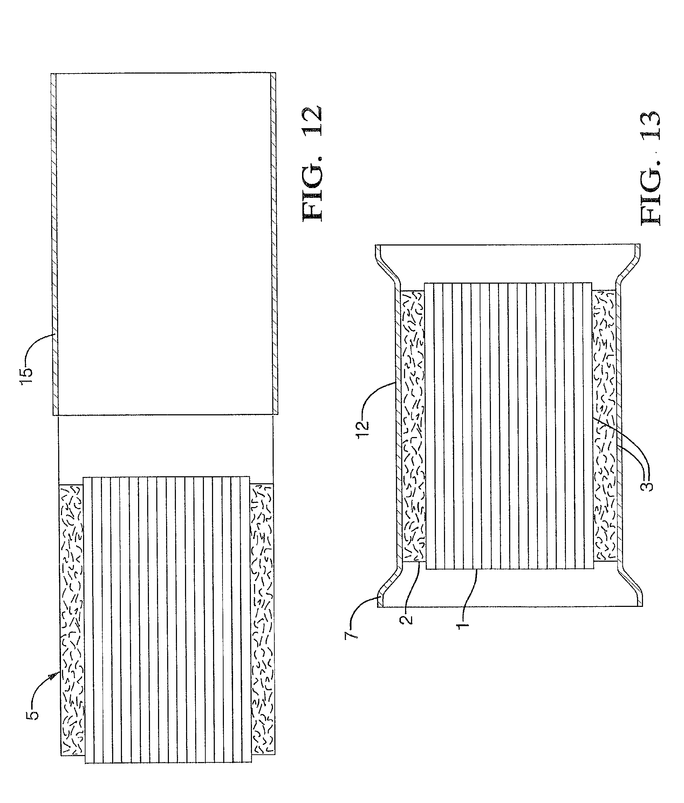

In another preferred embodiment, a "tourniquet" or a "sized-down" type shell is used. In comparison to tubular component 7, "tourniquet" type shell 14, as shown in Figure 10, or "sized-down" type shell 15, as shown in Figure 12, allows placement of subassembly 5, with adhesive on its outer surface without a stuffing cone. With use of either "tourniquet" type shell 14 or "sized-down" type shell 15 the "tourniquet" type shell 14 or "sized-down" type shell 15 can be enlarged sufficiently to allow subassembly 5 with adhesive coated on its outer surface to enter the shell without compression of mat support material 2, during placement and as such, minimal amounts of adhesive are displaced. Subsequent to placement of subassembly 5 with adhesive coated on its outer surface or on the inner surface of the shell 14/15, but prior to the adhesive setting, "tourniquet" type shell 14 or "sized-down" type shell 15 is closed to compress mat support material 2 by reducing the diameter of "tourniquet" type shell 14 or "sized-down" type shell 15. "Tourniquet" type shell 14 or "sized-down" type shell 15 can be closed using a series of jaws, or other suitable closing method. An assembled emissions control device using a "tourniquet" type shell is shown in Figure 11 and an assembled emission control device using a "sized down" type shell is shown in Figure 13. In each instance, the device may be completed by welding the overlapping edges together.

Frangible substrates may be used to comply with strict emission requirements. Proper retention of such substrates prevents damage resulting from shock and vibrations encountered during operations. Retaining the substrate by compressive force can result in damage and a decreased durability. Advantageously provided herein is an emissions control device wherein the substrate is retained without damaging compressive force providing for greater efficiency, durability, and ease of manufacture.

For example, samples were made comprising 1 gram per cubic centimeter (g/cc) mat density using several wraps of 1050 gram per square meter (g/m²) of 3H Interam 100 mat, cut to obtain 1 g/cc mat density. The mat density in the samples was about 1.04 g/cc. The samples were heat treated to 500°C for 1 hour to expand the mat. Axial load deflection was then tested. In the sample comprising a sand coated substrate with a standard shell, the maximum force was 176 pounds (lbs.). In contrast, for the sample comprising a sand coated substrate with the mat glued to the shell, the maximum force was 407 lbs; more than a 100% improvement. Basically, by the addition of the adhesive an axial load deflection of greater than or equal to about 400 lbs can be obtained. A synergistic effect was obtained by employing the adhesive that could not be expected.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention.

## Claims

1. A method for making an emissions control device, comprising:
disposing a mat support material (2) around at least a portion of a substrate (1);
disposing a shell on a side of the mat support material (2) opposite the substrate (1); and
adhesively bonding the mat support material (2) to at least one of the substrate (1) and the shell (6, 13, 14, 15) with a material comprising an inorganic binder.

2. The method of Claim 1, further comprising bonding the shell (6, 13, 14, 15) and the mat support material (2) with an activating adhesive (3) and bonding the mat support material (2) and the substrate (1) with a non-activating adhesive.

3. The method of Claim 2, further comprising activating the activating adhesive (3) subsequent to disposing the shell (6, 13, 14, 15) on the side of the mat support material (2) opposite the substrate (1).

4. The method of Claim 1, further comprising heating the device to bond the mat support material (2) and the shell (6, 13, 14, 15) together.

5. The method of Claim 1, further comprising bonding the mat support material (2) and the substrate (1) together prior to disposing the mat support material (2) around the substrate (1).

6. The method of Claim 1, further comprising abrading an outer surface of the mat support material (2).

7. The method of Claim 6, further comprising abrading an inner surface of the shell (6, 13, 14, 15).

8. The method of Claim 1, further comprising abrading an inner surface of the shell (6, 13, 14, 15).

9. The method of Claim 1, further comprising increasing a coefficient of friction between the shell (6, 13, 14, 15) and the mat support material (2) by applying an abrasive coating (3) to at least one of the inner surface of the shell (6, 13, 14, 15) or an outer surface of the mat support material (2).

10. A method for making an emissions control device comprising:
disposing a mat support material (2) around at least a portion of a substrate (1);
adhesively bonding the mat support material (2) and the substrate (1) together;
applying an activating adhesive (3) to at least one of an outer surface of the mat support material (2) and an inner surface of a shell (6, 13, 14, 15);
disposing the shell (6, 13, 14, 15) around the outer surface of the mat support material (2); and
activating the activating adhesive (3) to bond the shell (6, 13, 14, 15) and the mat support material (2) together.

11. The method of Claim 10, further comprising abrading an outer surface of the mat support material (2).

12. The method of Claim 11, further comprising abrading an inner surface of the shell (6, 13, 14, 15).

13. The method of Claim 10, further comprising abrading an inner surface of the shell (6, 13, 14, 15).

14. The method of Claim 10, further comprising increasing a coefficient of friction between the shell (6, 13, 14, 15) and the mat support material (2) by applying an abrasive coating to at least one of the inner surface of the shell (6, 13, 14, 15) or an outer surface of the mat support material (2).

15. An exhaust emissions control device, comprising:
a mat support material (2) disposed between a substrate (1) and a shell (6, 13, 14, 15), wherein the mat support material (2) is adhesively bonded to at least one of the substrate (1) and the shell (6, 13, 14, 15) with a material comprising an inorganic binder.

16. The exhaust emissions control device of Claim 15, having an axial load deflection of greater than or equal to about 400 lbs.

17. The exhaust emissions control device of Claim 15, wherein at least one of an outer surface of the mat support material (2) and an inner surface of the shell (6, 13, 14, 15) is abraded.

18. The exhaust emissions control device of Claim 15, further comprising an abrasive coating between the mat support material (2) and the shell (6, 13, 14, 15).
